# EUROPEAN PATENT APPLICATION

(11) **EP 2 816 215 A1**
(43) Date of publication of application: **24.12.2014**
(21) Application number: 14172530.9
(22) Date of filing: 16.06.2014
(51) Int. Cl.: F02G 1/043, B60K 25/00, B60W 30/188, B60K 3/02

(54) **Energy conversion system**

(30) Priority: 18.06.2013 SE 1350737
(71) Applicant: Scania CV AB, 151 87 Södertälje (SE)
(72) Inventor: Göras, Erik, 170 67 Solna (SE); Knälmann, Johan, 165 74 Hässelby (SE)

(57) **Abstract**

Energy conversion system (2) for a vehicle, comprising at least a Stirling engine (4) which has a warm side (6) and a cold side (8), a motion means (10) for transfer of mechanical energy from the Stirling engine (4), a heat module (12) situated close to the Stirling engine's warm side (6) and adapted to delivering heat (14) to said warm side for operation of the Stirling engine, which motion means (10) is adapted to driving a generator (16) to charge one or more of the vehicle's batteries (18). The heat module (12) is adapted to receiving heat (20, 22), for delivery to the warm side of the Stirling engine, from the vehicle's exhaust system (24) and from at least one separate heat source (26), and to switching between a first operating mode in which the heat (20) from the vehicle's exhaust system (24) is used and a second operating mode in which the heat (22) from the separate heat source (26) is used. The energy conversion system comprises a control unit (30) adapted to receiving one or more sensor signals (32) which represent one or more operating parameters for the vehicle, and to controlling the operating mode for said heat module (12) on the basis of said operating parameter or parameters.

## Description

### Field of the invention

The present invention relates to an energy conversion system according to the preamble of the independent claim, and in particular an energy conversion system for a vehicle, which system comprises a Stirling engine.

### Background to the invention

Vehicles are now provided with a wide variety of equipment which is run on electricity, e.g. lighting, radio, TV, heating etc. When the vehicle is stationary and the engine is not running, which means that the generator cannot charge the batteries, these various kinds of equipment will be powered by electricity from the vehicle's batteries, which is a disadvantage in that the batteries may well thus become discharged.

A Stirling engine is a highly energy-efficient engine with characteristics appropriate to its being used in particular for vehicles with a combustion engine, since there will be access to surplus heat in the exhaust gases from the combustion engine which the Stirling engine can utilise.

In a Stirling engine there is a closed cylinder containing a gas, helium or hydrogen, which is alternately heated and cooled to drive pistons in the cylinder. A Stirling engine uses heat which is for example produced in a combustion chamber which is separate from the actual engine. This heat is converted to energy in the engine via the gas in the closed cylinder. There are also types of Stirling engines which have two closed cylinders connected together so that the gas can flow between them. In more detail, the Stirling engine technique is based on sufficient pressure differences occurring in the tight cylinder. These pressure differences are achieved by the engine having two primary elements, viz. a warm element and a cold element. When the warm element is heated the operative gas expands, creating a pressure in the cylinder. When the engine's movable parts are set in motion, the warm gas moves to the engine's cold element and is cooled, thereby reversing the pressure. So long as sufficient temperature differences can reached, the engine will continue to run.

The gas causes the pistons of the engine to move and produce kinetic energy. All that the Stirling engine thus needs is heat and it does not matter how the heat is produced. It may be extracted from solar radiation or come from anything which burns, e.g. oil, diesel fuel, petrol or gas. A Stirling engine is flexible, quiet and free from vibration. It can be made to work with small temperature differences, but its efficiency increases with higher temperature differences between the warm and cold sides.

The patent specifications cited below give examples of using a Stirling engine in vehicles.

DE-19745167 refers to a Stirling engine connected to a generator in order to generate heat or cold in a vehicle.

US-7181912 refers to a vehicle with a combustion engine and a Stirling engine. Surplus heat from the combustion engine's exhaust gases is used by the Stirling engine's high-temperature side. The Stirling engine is adapted to driving at least one generator on board the vehicle in order to charge the vehicle's batteries.

US-2013/0019595 refers to a regulating device for a Stirling engine which uses the exhaust gases from a combustion engine to heat the Stirling engine's high-temperature side.

EP-1979601 refers to a Stirling engine which uses the surplus heat from a combustion engine.

The object of the present invention is to alleviate the problem of a vehicle's batteries being discharged by the use of various kinds of equipment when the vehicle has switched off the combustion engine, which will then not drive the generator and therefore not charge the batteries.

A further object is to improve the charge of the batteries even when the combustion engine is running.

### Summary of the invention

The above objects are achieved with the invention defined by the independent claim.

Preferred embodiments are defined by the dependent claims.

The invention is based on the inventors' insight of utilising the heat generated in a vehicle's exhaust system when its combustion engine is in operation, and of converting this heat to mechanical energy by means of a Stirling engine. Providing a heat module which can also receive heat from a separate heat source makes it possible for the energy conversion system to be used even when the combustion engine is not in operation. According to the invention the Stirling engine is used to convert the thermal energy to mechanical energy which is used to drive a generator which charges the batteries, and also to drive other ancillary units.

### Brief description of drawing

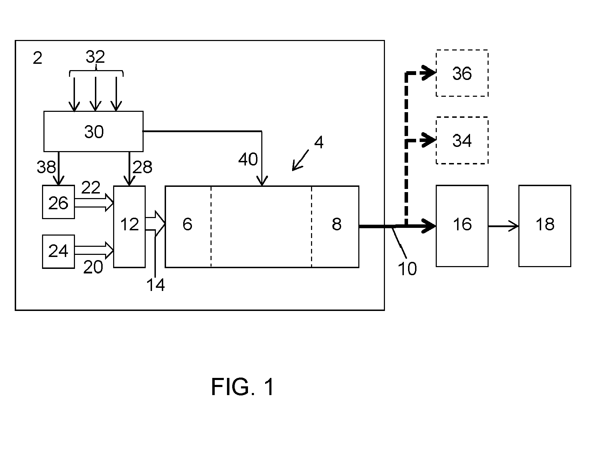

Figure 1 is a schematic block diagram illustrating the present invention.

### Detailed description of preferred embodiments of the invention

The invention will now be described in detail with reference to the attached drawing.

The invention relates to an energy conversion system 2 for a vehicle, e.g. a truck, a bus or a car, which system comprises at least one Stirling engine 4 which has a warm side 6 and a cold side 8. The system 2 further comprises a motion means 10, e.g. a rotating shaft or a rod which imparts longitudinal movements, to transfer mechanical energy from the Stirling engine, and a heat module 12 situated close to the Stirling engine's warm side 6 and adapted to delivering heat 14 to said warm side in order to operate the Stirling engine. A more detailed description of the general function of a Stirling engine is to be found in generally available technical descriptions and in the patent specifications cited above.

The motion means 10 is adapted to driving a generator 16 to charge one or more batteries 18 of the vehicle.

The heat module 12 is adapted to receiving heat 20, 22, for delivery to the warm side of the Stirling engine, from the vehicle's exhaust system 24 and from at least one separate heat source 26. In Figure 1 the heat 14, 20, 22 is schematically represented by hollow arrows.

The heat module 12 is adapted to switching between a first operating mode in which the heat 20 from the vehicle's exhaust 24 is used and a second operating mode in which the heat 22 from a separate heat source 26 is used.
The energy conversion system further comprises a control unit 30 adapted to receiving one or more sensor signals 32 which represent one or more operating parameters for the vehicle, and to controlling the operating mode for said heat module on the basis of said operating parameter or parameters.

In one embodiment the control unit 30 is adapted to generating a control signal 28 on the basis of said operating parameter or parameters and to conveying to the heat module said control signal for control of the operating mode.
One operating parameter preferably indicates whether the vehicle's combustion engine is in operation and another operating parameter represents the temperature of the exhaust gases from the combustion engine. The first operating mode is activated when the temperature of the exhaust gases is above a predetermined threshold value. The temperature of the exhaust gases from the combustion engine of a vehicle may sometimes be as high as 750°C. The threshold value for activation of the first operating mode is set according to a number of criteria. Inter alia it may be set to a temperature value which ensures that the first operating mode is used when the combustion engine is working normally.

The temperature of the exhaust gases needs to be above the threshold value for a predetermined period of time before the first operating mode is activated. This period may be of the order of a number of minutes. Its length is affected inter alia by the fact that it takes a certain time for the heat to be transferred from the exhaust gases to the Stirling engine's warm side via the heat module.

In another embodiment the second operating mode is activated if the temperature of the exhaust gases is below said predetermined threshold value. Here the temperature needs to be below the threshold value for a certain time before the second operating mode is activated. Activation is effected by the control unit 30 generating a second control signal 38 which is conveyed to and activates the separate heat source 26. This separate heat source takes in one embodiment the form of a combustion chamber to burn a fuel, which may be liquid, e.g. gas, diesel fuel or petrol, or solid, e.g. pellets or wood chips.

In a further embodiment the motion means 10 is adapted to driving a fuel pump 34 which is adapted to pumping the fuel to the combustion chamber. This embodiment is represented by broken lines in the diagram.

In yet another embodiment said motion means is adapted to driving a liquid pump 36 for the vehicle's coolant.

In one variant the energy conversion system may be used in conjunction with a heating system for the vehicle. The heating system will then be constructed round or be combined with a Stirling engine which is adapted to driving a generator, and preferably a fuel pump and a coolant pump.

Alternatively, the energy conversion system with the Stirling engine is a freestanding system which may for example be used as a supplementary ancillary unit to existing heaters.

The operation of the Stirling engine 4 is substantially controlled by the control unit 30 according to a set of predetermined operating rules. The control unit is adapted to generating a third control signal 40 containing necessary instructions based on these operating rules for controlling the operation of the Stirling engine. The operating rules take inter alia into account the temperatures of the Stirling engine's warm and cold sides, and the rate of the mechanical motion imparted by the transfer means, e.g. in the form of the rotation speed of an output shaft. The third control signal 40 also activates a starting device for the Stirling engine to start the engine when stated requirements are fulfilled.

The present invention is not restricted to the preferred embodiments described above. Sundry alternatives, modifications and equivalents may be used. The above embodiments are therefore not to be regarded as limiting the invention's protective scope which is defined by the attached claims.

## Claims

1. An energy conversion system (2) for a vehicle, comprising at least a Stirling engine (4) which has a warm side (6) and a cold side (8), a motion means (10) for transfer of mechanical energy from the Stirling engine (4), a heat module (12) situated close to the Stirling engine's warm side (6) and adapted to delivering heat (14) to said warm side for operation of the Stirling engine, which motion means (10) is adapted to driving a generator (16) to charge one or more of the vehicle's batteries (18), **characterised in that** the heat module (12) is adapted to receiving heat (20, 22), for delivery to the warm side of the Stirling engine, from the vehicle's exhaust system (24) and from at least one separate heat source (26), and to switching between a first operating mode in which the heat (20) from the vehicle's exhaust system (24) is used and a second operating mode in which the heat (22) from the separate heat source (26) is used, and that the energy conversion system comprises a control unit (30) adapted to receiving one or more sensor signals (32) which represent one or more operating parameters for the vehicle, and to controlling the operating mode for said heat module (12) on the basis of said operating parameter or parameters.

2. The energy conversion system according to claim 1, in which the control unit (30) is adapted to generating a control signal (28) on the basis of said operating parameter or parameters and to conveying to the heat module said control signal (28) for control of the operating mode.

3. The energy conversion system according to claim 1 or 2, in which one operating parameter indicates whether the vehicle's combustion engine is in operation.

4. The energy conversion system according to any one of claims 1-3, in which one operating parameter represents the temperature of the exhaust gases from the vehicle's combustion engine, and the first operating mode is activated if the temperature of the exhaust gases is above a predetermined threshold value for their temperature.

5. The energy conversion system according to claim 4, in which said second operating mode is activated if the temperature of the exhaust gases is below said predetermined threshold value, by said control unit (30) generating a second control signal (38) which is conveyed to and activates said separate heat source (26).

6. The energy conversion system according to any one of claims 1-5, in which said separate heat source (26) takes the form of a combustion chamber to burn a fuel.

7. The energy conversion system according to claim 6, in which said motion means (10) is adapted to driving a fuel pump (34) which is adapted to pumping said fuel to the combustion chamber.

8. The energy conversion system according to any one of claims 1-7, in which said motion means (10) is adapted to driving a liquid pump (36) for the vehicle's coolant.

9. The energy conversion system according to any one of claims 1-8, in which said control unit (30) is adapted to controlling the operation of the Stirling engine (4) according to a set of predetermined operating rules and to generating a third control signal (40) on the basis of these operating rules for controlling the operation of the Stirling engine (4).
